# EUROPÄISCHE PATENTSCHRIFT

(11) **EP 0 903 076 B1**
(45) Veröffentlichungstag und Bekanntmachung des Hinweises auf die Patenterteilung: **22.05.2002**
(21) Anmeldenummer: 98116903.0
(22) Anmeldetag: 08.09.1998
(51) Int. Cl.: A01D 67/00

(54) **Auffahrsicherung für gezogene landwirtschaftliche Arbeitsgeräte**
Collision protection for drawn agricultural working implement
Protecteur de collision pour appareil de travail agricole tracté

(30) Priorität: 10.09.1997 DE 19739719
(43) Veröffentlichungstag der Anmeldung: 24.03.1999
(73) Patentinhaber: CLAAS SAULGAU GMBH, D-88340 Saulgau (DE)
(72) Erfinder: Schulz, Wilfried, 88348 Saulgau (DE)

(56) Entgegenhaltungen:
- EP-A- 0 223 302
- EP-A- 0 634 092
- DE-A- 19 527 356
- DE-U- 9 312 736
- FR-A- 2 723 503
- US-A- 3 267 651
- US-A- 4 393 943

## Beschreibung

Die Erfindung betrifft eine Auffahrsicherung für gezogene landwirtschaftliche Arbeitsgeräte gemäß dem Gattungsbegriff des Patentanspruchs 1.

Derartige landwirtschaftliche Arbeitsgeräte, insbesondere Mähwerke werden heute im wesentlichen an den Dreipunktanbau von Schleppern der unterschiedlichsten Leistungsklassen adaptiert. Dabei ist der Leistungsbedarf der Arbeitsgeräte so auf die verfügbare Schlepperleistung abgestimmt, daß sie während ihres Einsatzes zum Teil mit sehr hoher Fahrgeschwindigkeit über die zu bearbeitenden Flächen gezogen werden. Für in unmittelbarer Nähe des Bodens geführte Mäheinrichtungen, die mit hoher Geschwindigkeit umlaufende oder oszillierende Arbeitsorgane aufweisen, können im Arbeitsbereich liegende Hindernisse, wie etwa Steine zu erheblichen Beschädigungen an diesen führen. Zur Verringerung derartiger Schäden haben sich an rotierenden Mähorganen durch Bolzen gehaltene und um diesen frei drehbare Messer durchgesetzt, die bei Kollision mit Hindernissen verschiedener Art in einen blechverkleideten Schutzbereich wegschwenken. Da entsprechend große Hindernisse auch Deformationen an der gesamten Mäheinrichtung hervorrufen können, werden zudem in immer größerem Umfang Auffahrsicherungen eingesetzt, die entweder ein Ausheben der gesamten Mäheinrichtung oder ein sanftes Gleiten derselben über das im Arbeitsbereich liegende Hindernis ermöglichen. In der europäischen Patentschrift EP 634 092 B 1 wird beispielsweise eine Auffahrsicherung offenbart, die es über eine Kombination aus vertikal und senkrecht dazu in Fahrtrichtung angeordneten Zugfedern ermöglicht, den Mähbalken mit den auf ihm adaptierten umlaufenden Schneidmitteln um eine quer zur Fahrtrichtung verlaufende, auf der zugfahrzeugabgewandten Seite des Mähbalkens angeordnete Achse zu verschwenken. Auf diese Weise gleitet der Mähbalken über das im Arbeitsbereich liegende Hindernis. Die durch das Hindernis kontaktierte Unterseite des Mähbalkens kann nur dann vor reibungsbedingtem Verschleiß geschützt werden, wenn offenbarungsgemäß durch Betätigung eines zusätzlichen Stellorgans, vorzugsweise eines Hydraulikzylinders, der Mähbalken angehoben wird.

Aus dem weiten Spektrum der Kupplungselemente, die zwischen Zug- und Anhängefahrzeugen eingesetzt werden, sind außerdem unter dem Gesichtspunkt einer stoßkraftübertragungsarmen Koppelung zwischen beiden entsprechend dem Gebrauchsmuster G 79 34 475 federoder hydraulisch gedämpfte Stangenführungen bekannt, deren gegeneinander verschiebbar angeordneten Außen- und Innenteile die am Anhängefahrzeug auftretenden, durch Bodenunebenheiten oder dergleichen hervorgerufene Stoßbelastungen in erheblich abgeschwächter Form auf die Koppelöse des Zugfahrzeugs übertragen. Derartige Konstruktionen sind jedoch nicht in der Lage, den Bodenkontakt des Anhängefahrzeugs so zu verändern, daß beispielsweise hindernisbedingte Bodenunebenheiten so überwunden werden können, daß erheblich niedrigere Stoßbelastungen am Anhängefährzeug auftreten.

Der Erfindung liegt deshalb die Aufgabe zugrunde, eine Auffahrsicherung für gezogene landwirtschaftliche Arbeitsgeräte gemäß dem Gattungsbegriff des Anspruchs 1 so zu gestalten, daß die Arbeitsorgane auf einfache Weise und ohne fremdbetätigte Verstellmechanismen im Arbeitsbereich befindlichen Hindernissen ausweichen können und niedrige Stoßbelastungen auf die Koppeleinrichtung des Zugfahrzeugs übertragen werden.

Erfindungsgemäß wird die Aufgabe durch eine Auffahrsicherung für gezogene landwirtschaftliche Arbeitsgeräte mit den kennzeichnenden Merkmalen des Anspruchs 1 gelöst. Eine derartige Gestaltung der Auffahrsicherung ermöglicht ein selbsttätiges Ausweichen des gezogenen landwirtschaftlichen Arbeitsgerätes beim Auftreffen auf ein in seinem Arbeitsbereich befindliches Hindernis und verringert außerdem die vom Arbeitsgerät auf die Koppelöse des Zugfahrzeugs übertragenen Stoßbelastungen. Vorteilhafte Ausgestaltungen sind Gegenstand der Unteransprüche und werden nachfolgend anhand eines Ausführungsbeispiels und erläuternden Zeichnungen beschrieben.

Es zeigen
- Figur 1: ein Mähwerk mit erfindungsgemäßer Auffahrsicherung in der Seitenansicht
- Figur 2: ein Mähwerk mit schematisch dargestellter erfindungsgemäßer Auffahrsicherung in Ansicht von oben
- Figur 3: ein Mähwerk mit erfindungsgemäßer Auffahrsicherung in ausgehobener Stellung in der Seitenansicht
- Figur 4: ein Mähwerk mit schematisch dargestellter erfindungsgemäßer Auffahrsicherung und zusätzlicher Verstelleinheit in Ansicht von oben

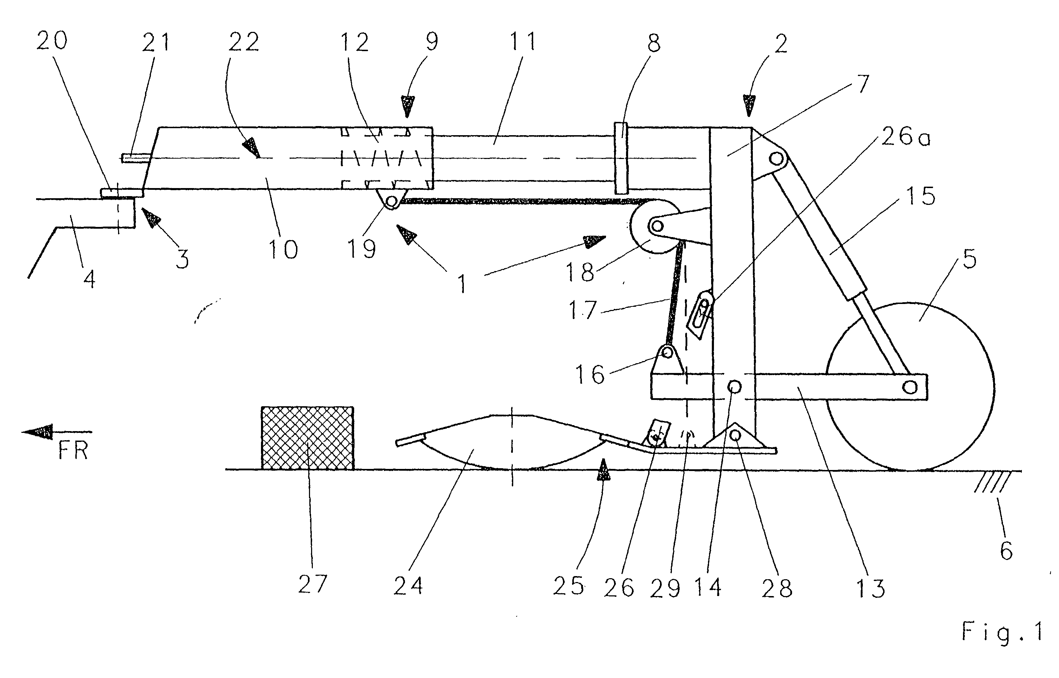

In Figur 1 ist eine erfindungsgemäße Auffahrsicherung 1 als Bestandteil eines als Mähwerk 2 ausgeführten landwirtschaftlichen Arbeitsgerätes dargestellt, welches über eine Koppeleinrichtung 3 an einer nicht näher dargestellten Zugmaschine 4 adaptiert ist. Das Mähwerk 2 wird zugfahrzeugseitig über die Koppeleinrichtung 3 am Zugfahrzeug 4 und heckseitig über mindestens ein Laufrad 5 auf dem Boden 6 abgestützt. Der Hauptrahmen 7 des Mähwerks 2 ist um eine vertikal zur Fahrtrichtung FR verlaufende Achse 8 schwenkbar mit einer Zugdeichsel 9 verbunden, die erfindungsgemäß aus teleskopartig gegeneinander verschiebbaren Tragprofilen 10,11 gebildet wird, die wiederum durch nicht näher dargestellte und an sich bekannte Dämpfungselemente 12 vorzugsweise innerhalb des äußeren Tragprofils 10 miteinander gekoppelt sind.

Mindestens eine Schwinge 13, die um eine quer zur Fahrtrichtung FR verlaufende Achse 14 schwenkbar untenseitig am Hauptrahmen 7 angelenkt ist, nimmt an ihrer dem Zugfahrzeug 4 abgewandten und über mindestens einen Hydraulikzylinder 15 mit dem oberen Bereich des Hauptrahmens 7 verbundenen Seite ein Laufrad 5 auf. Das zugfahrzeugseitige Ende der Schwinge 13 ist mit einer nicht näher beschriebenen Befestigung 16 versehen, in der ein Übertragungsorgan 17, welches einfachstenfalls ein Zugseil sein kann, fixiert ist, das über eine am Hauptrahmen 7 angebrachte Umlenkrolle 18 anderenends in einer ebenfalls nicht näher beschriebenen Befestigung 19 am äußeren Tragprofil 10 fixiert ist. Das als Zugseil dargestellte Übertragungsorgan 17 kann aber auch durch nicht näher erläuterte, an sich bekannte Koppelgestänge oder Hydraulikelemente gebildet werden.

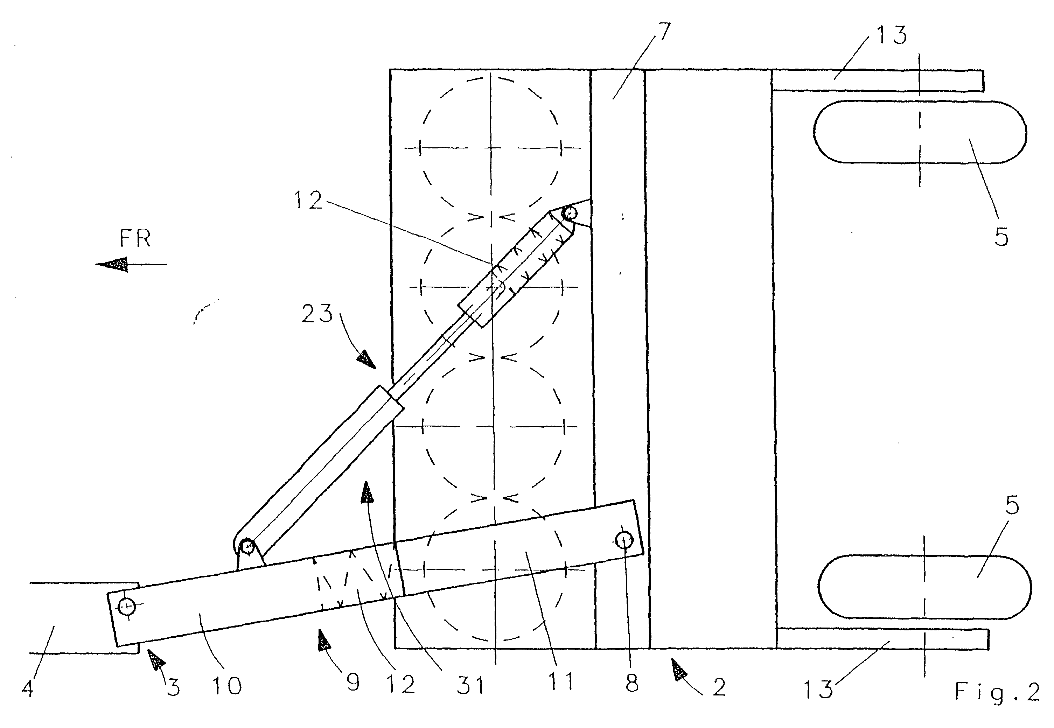

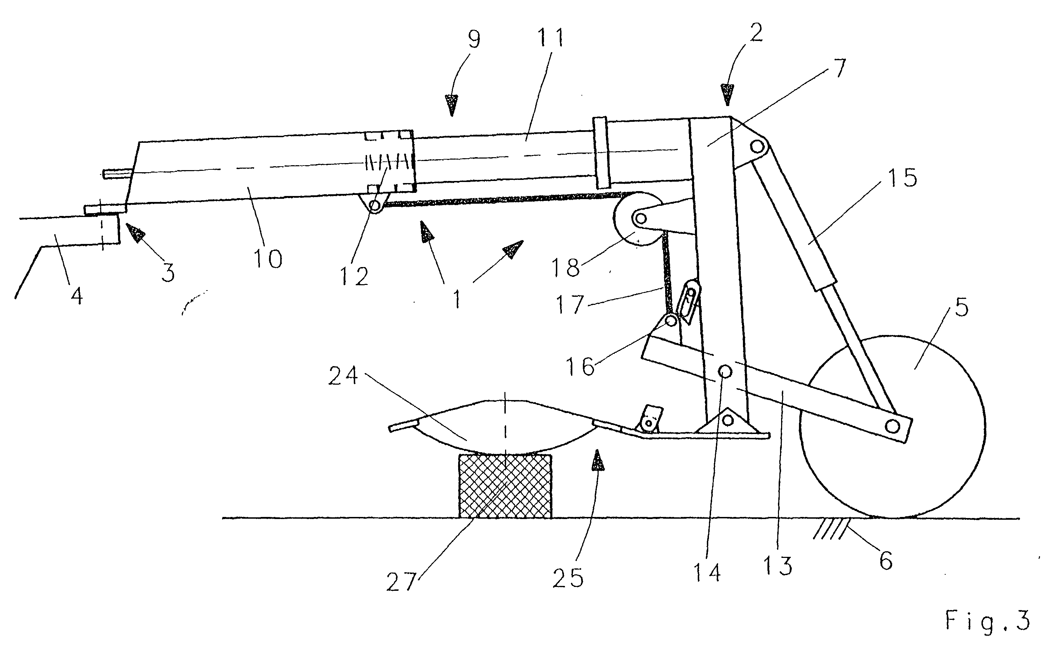

Das äußere Tragprofil 10 verfügt an seinem zugfahrzeugseitigen Ende über eine als Öse oder Bolzen ausgeführte Koppel 20 zur Adaptierung am Zugfahrzeug 4 und einen Gelenkwellenanschluß 21 zur Übertragung der Antriebsenergie vom Zugfahrzeug 4 über eine nicht näher dargestellte, im Inneren der Tragprofile 10,11 verlaufende, ebenfalls teleskopartig verschiebbare Antriebswelle 22 zum Mähwerk 2. Die Antriebswelle 22 kann aber auch durch nicht dargestellte hydraulische Bauelemente ersetzt werden, deren energieübertragender Ölstrom durch flexible innerhalb der Tragprofile 10,11 angeordnete, eine Längenänderung realisierende Hydraulikschläuche gefördert wird. Desweiteren kann die Zugdeichsel 9 mit einer an sich bekannten Deichselverstellung 23 (Figur 2) versehen sein, deren Hydraulikzylinder 31 einenends am äußeren Tragprofil 10 und anderenends über ebenfalls an sich bekannte Dämpfungselemente 12 am Hauptrahmen 7 des Mähwerks 2 angelenkt ist. In einer ersten Ausführungsform ist vorgesehen, den die nicht näher beschriebenen Mähaggregate 24 tragenden Mähbalken 25 über ein Koppelglied 26, dessen mähwerkseitige Anlenkung als Langlochführung 26a ausgeführt ist mit dem Hauptrahmen 7 des Mähwerks 2 so zu verbinden, daß der Schwenkbereiche des Mähbalkens 25 begrenzt wird. Trifft ein derart ausgeführter Mähbalken 25 auf ein Hindernis 27, wird die Bewegung des Mähwerks 2 aufgrund der Dämpfungselemente 12 gegenüber dem äußeren Tragprofil 10 verzögert. Dabei ruft das am äußeren Tragprofil befestigte Übertragungsorgan 17 eine Schwenkbewegung der Schwinge 13 um die Achse 14 derart hervor, daß das Mähwerk 2 und damit der am Hindernis 27 aufgelaufene Mähbalken 25 über das am anderen Ende der Schwinge 13 befestigte und auf dem Boden 6 abrollende Laufrad 5 in die in Figur 3 dargestellte Lage ausgehoben wird. In einer weiteren in Figur 1 gestrichelt dargestellten Ausführungsform kann das Übertragungsorgan 17 mähwerkseitig auch direkt an einem quer zur Fahrtrichtung um Achse 28 schwenkbaren Mähbalken 25 in einer nicht näher erläuterten Befestigung 29 fixiert sein. Dadurch wird an einem im Arbeitsbereich liegenden Hindernis 27 nicht das gesamte Mähwerk 2, sondern nur der die Mähaggregate 24 tragende Mähbalken 25 ausgehoben, so daß das Übertragungsorgan 17 einer geringeren Zugkraftbelastung ausgesetzt ist. In einer weiteren, nicht dargestellten Ausführungsform ist vorgesehen, das Übertragungsorgan 17 direkt mit dem Hydraulikzylinder 15 in der Weise zu koppeln, daß beim Auftreffen des Mähbalkens 25 auf ein Hindernis 27 der Hydraulikzylinder 15 ausfährt und umgekehrt nach dem Passieren des Hindernisses 27 wieder in seine ursprüngliche Lage zurückgeht.

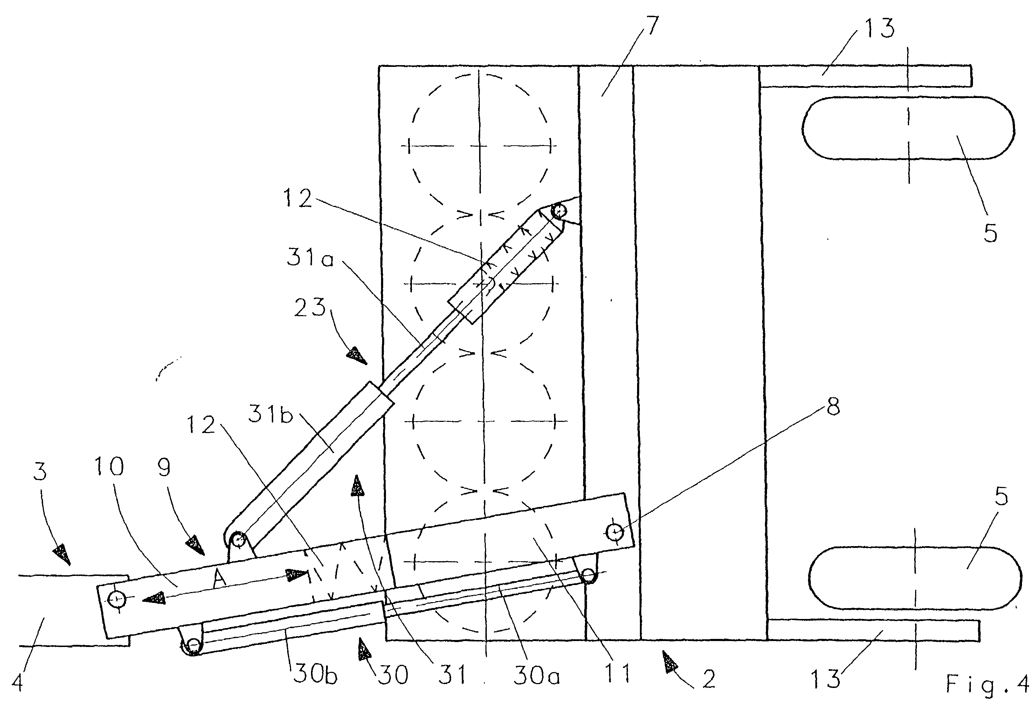

Neben dem beschriebenen Ausweichen des Mähbalkens 25 oder des gesamten Mähwerkes 2 an einem im Arbeitsbereich befindlichen Hindernis 27 kann eine erfindungsgemäß ausgeführte Zugdeichsel 9 bzw. Deichselverstellung 23 auch Erschütterungen des Mähwerks 2, die entweder über das innere Tragprofil 11 oder über die Deichselverstellung 23 auf das äußere Tragprofil 10 und damit über die Koppel 13 auf das Zugfahrzeug 4 übertragen werden, dämpfen oder je nach deren Intensität ganz kompensieren. Werden die gegeneinander verschiebbaren Tragprofile 10,11 der Zugdeichsel 9 außenseitig durch mindestens ein Verstellglied, welches einfachstenfalls als ein während des Mähwerkbetriebs drucklos geschalteter Hydraulikzylinder 30 (Figur 4) ausgeführt ist, miteinander verbunden, besteht die Möglichkeit beide Tragprofile 10,11 definiert gegeneinander zu verschieben, so daß die Länge der Zugdeichsel 9 variiert werden kann. Der Zylinderhub des Hydraulikzylinders 30 wird dabei vom möglichen Weg A, den das innere Tragprofil 11 im äußeren Tragprofil 10 zurücklegen kann bestimmt. Durch Druckbeaufschlagung der Hydraulikzylinder 30 und 31 in der Weise, daß sich der Kolben 30a, 31a in den Zylinder 30b, 31b bewegt, kann zur Erreichnung einer besseren Manövrierfähigkeit im Straßenverkehr eine im Vergleich zur Länge des Anbaugerätes in Arbeitsstellung kürzere Transportlänge eingestellt werden.

Damit ist dem Fachmann eine Anleitung gegeben, die erfindungsgemäße Auffahrsicherung 1 in gleicher oder abgewandelter Form auch an einem anderen als dem beschriebenen landwirtschaftlichen Arbeitsgerät einzusetzen um die beschriebenen Effekte zu erzielen.

### Bezugszeichenliste

- 1: Auffahrsicherung
- 2: Mähwerk
- 3: Koppeleinrichtung
- 4: Zugfahrzeug
- 5: Laufrad
- 6: Boden
- 7: Hauptrahmen
- 8: Achse
- 9: Zugdeichsel
- 10: äußeres Tragprofil
- 11: inneres Tragprofil
- 12: Dämpfungselement
- 13: Schwinge
- 14: Achse
- 15: Hydraulikzylinder
- 16: Befestigung
- 17: Übertragungsorgan
- 18: Umlenkrolle
- 19: Befestigung
- 20: Koppel
- 21: Gelenkwellenanschluß
- 22: Antriebswelle
- 23: Deichselverstellung
- 24: Mähaggregat
- 25: Mähbalken
- 26: Koppelglied
- 26a: Langlochführung
- 27: Hindernis
- 28: Achse
- 29: Befestigung
- 30: Hydraulikzylinder
- 31: Hydraulikzylinder
- 30a, 31a: Kolben
- 30b, 31b: Zylinder
- A: Verschiebung des inneren Tragprofils 11
- FR: Fahrtrichtung

## Patentansprüche

1. Auffahrsicherung für gezogene landwirtschaftliche Arbeitsgeräte, insbesondere Mähwerke (2), deren aus auf einem Mähbalken (25) angeordneten Mähaggregaten (24) bestehenden Arbeitsorgane an einem Hauptrahmen (7) festgelegt sind, der über eine schwenkbar mit dem Hauptrahmen verbundene Zugdeichsel (9) am Zugfahrzeug (4) und über mindestens ein höhenverstellbares Laufrad (5) auf dem Boden abgestütz wird,
**dadurch gekennzeichnet,**
**daß** das Auftreffen der Arbeitsorgane (24,25) auf ein Hindernis (27) in Fahrtrichtung (FR) zu einer Relativbewegung zwischen Zugfahrzeug (4) und Arbeitsgerät (2) führt, die von mindestens einem Übertragungsorgan (17) auf das landwirtschaftliche Arbeitsgerät (2) übertragen wird und an ihm eine vertikale Auslenkung der Arbeitsorgane (24, 25) hervorruft.

2. Auffahrsicherung für gezogene landwirtschaftliche Arbeitsgeräte nach Anspruch 1,
**dadurch gekennzeichnet,**
**daß** die Relativbewegung zwischen Zugfahrzeug (4) und Arbeitsgerät (2) durch eine aus teleskopartig gegeneinander verschiebbaren Tragprofilen (10, 11) bestehende Zugdeichsel (9) hervorgerufen wird.

3. Auffahrsicherung für gezogene landwirtschaftliche Arbeitsgeräte nach Anspruch 2,
**dadurch gekennzeichnet,**
**daß** die Tragprofile (10, 11) durch elastische, mechanische, hydraulische oder pneumatische Dämpfungselemente (12) miteinander gekoppelt sind.

4. Auffahrsicherung für gezogene landwirtschaftliche Arbeitsgeräte nach Anspruch 1 - 3,
**dadurch gekennzeichnet,**
**daß** das Übertragungsorgan (17) einenends am äußeren Tragprofil (10) und anderenends am zugfahrzeugseitigen Ende einer am Hauptrahmen (7) drehbar gelagerten und an ihrem anderen Ende das Laufrad (5) tragenden Schwinge 13 fixiert ist, so daß bei einer Relativbewegung zwischen äußerem und innerem Tragprofil (10, 11) über Laufrad (5) und Zugdeichsel (9) Arbeitsgerät (2) in vertikaler Richtung ausgelenkt wird.

5. Auffahrsicherung für gezogene landwirtschaftliche Arbeitsgeräte nach Anspruch 1 - 3,
**dadurch gekennzeichnet,**
**daß** das Übertragungsorgan (17) einenends am äußeren Tragprofil (10) und anderenends an einem um eine quer zur Fahrtrichtung FR verlaufende Achse (28) schwenkbaren, die Mähaggregate (24) tragenden Mähbalken (25) fixiert ist, so daß bei einer Relativbewegung zwischen äußerem und innerem Tragprofil (10, 11) nur der die Mähaggregate (24) tragende Mähbalken (25) in vertikaler Richtung ausgelenkt wird.

6. Auffahrsicherung für gezogene landwirtschaftliche Arbeitsgeräte nach Anspruch 1 - 3,
**dadurch gekennzeichnet,**
**daß** das Übertragungsorgan (17) einenends mit dem äußeren Tragprofil (10) verbunden ist und anderenends auf den, die Höhe des Laufrades (5) verstellbaren Hydraulikzylinder (15) einwirkt, so daß bei einer Relativbewegung zwischen äußerem und innerem Tragprofil (10, 11) Laufrad (5) und damit Arbeitsgerät (2) in vertikaler Richtung ausgelenkt werden.

7. Auffahrsicherung für gezogene landwirtschaftliche Arbeitsgeräte nach Anspruch 1-6,
**dadurch gekennzeichnet,**
**daß** das Übertragungsorgan (17) als Zugmittel, mechanisches Koppelglied, hydraulisches oder pneumatisches Element ausgeführt ist.

8. Auffahrsicherung für gezogene landwirtschaftliche Arbeitsgeräte nach Anspruch 1-7,
**dadurch gekennzeichnet,**
**daß** das äußere Tragprofil (10) zusätzlich über eine Deichselverstellung (23) mit dem Arbeitsgerät (2) verbunden ist.

9. Auffahrsicherung für gezogene landwirtschaftliche Arbeitsgeräte nach Anspruch 8,
**dadurch gekennzeichnet,**
**daß** die Deichselverstellung (23) ebenfalls elastische, mechanische, hydraulische oder pneumatische Dämpfungselemente (12) aufweist.

10. Auffahrsicherung für gezogene landwirtschaftliche Arbeitsgeräte nach Anspruch 1-9,
**dadurch gekennzeichnet,**
**daß** die Tragprofile (10, 11) über mindestens einen Hydraulikzylinder (30) miteinander gekoppelt sind, der das innere Tragprofil (11) so im äußeren Tragprofil (10) verschieben kann, daß für einen sicheren Transport des Arbeitsgerätes (2) eine Verkürzung der Deichsellänge erreicht wird.

11. Auffahrsicherung für gezogene landwirtschaftliche Arbeitsgeräte nach Anspruch 10,
**dadurch gekennzeichnet,**
**daß** der Hydraulikzylinder (30) während des Betriebes der Mähaggregate (24) drucklos geschaltet werden kann.

12. Auffahrsicherung für gezogene landwirtschaftliche Arbeitsgeräte nach Anspruch 3,
**dadurch gekennzeichnet,**
**daß** die Dämpfungselemente (12) innerhalb des äußeren Tragprofils (10) angeordnet sind.

## Claims

1. A collision prevention apparatus for towed agricultural working implements, in particular cutting mechanisms (2), whose working members comprising cutting units (24) arranged on a cutting bar (25) are fixed to a main frame (7) which is supported on the towing vehicle (4) by way of a tow bar (9) connected pivotably to the main frame (7) and on the ground by way of at least one height-adjustable support wheel (5), **characterised in that** the fact of the working members (24, 25) encountering an obstacle (27) in the direction of travel (FR) results in a relative movement between the towing vehicle (4) and the working implement (2), which relative movement is transmitted by at least one transmission member (17) to the agricultural working implement (2) and produces thereat a vertical deflection of the working members (24, 25).

2. A collision prevention apparatus for towed agricultural working implements according to claim 1 **characterised in that** the relative movement between the towing vehicle (4) and the working implement (2) is produced by a tow bar (9) comprising support profile members (10, 11) which are telescopically displaceable relative to each other.

3. A collision prevention apparatus for towed agricultural working implements according to claim 2 **characterised in that** the support profile members (10, 11) are coupled together by elastic, mechanical, hydraulic or pneumatic damping elements (12).

4. A collision prevention apparatus for towed agricultural working implements according to claims 1 to 3 **characterised in that** the transmission member (17) is fixed at one end to the outer support profile member (10) and at the other end to the towing vehicle end of a rocker arm (13) which is rotatably mounted to the main frame (7) and which at its other end carries the support wheel (5) so that upon a relative movement between the outer and inner support profile members (10, 11) the working implement (2) is deflected in the vertical direction by way of the support wheel (5) and the tow bar (9).

5. A collision prevention apparatus for towed agricultural working implements according to claims 1 to 3 **characterised in that** the transmission member (17) is fixed at one end to the outer support profile member (10) and at the other end to a cutting bar (25) which carries the cutting units (24) and which is pivotable about an axis (28) extending transversely with respect to the direction of travel FR so that upon a relative movement between the outer and inner support profile members (10, 11) only the cutting bar (25) which carries the cutting units (24) is deflected in the vertical direction.

6. A collision prevention apparatus for towed agricultural working implements according to claims 1 to 3 **characterised in that** the transmission member (17) is connected at one end to the outer support profile member (10) and at the other end acts on the hydraulic cylinder (15) which is adjustable for the height of the support wheel (5) so that upon a relative movement between the outer and inner support profile members (10, 11) the support wheel (5) and therewith the working implement (2) are deflected in the vertical direction.

7. A collision prevention apparatus for towed agricultural working implements according to claims 1 to 6 **characterised in that** the transmission member (17) is in the form of a pulling means, a mechanical coupling member, a hydraulic element or a pneumatic element.

8. A collision prevention apparatus for towed agricultural working implements according to claims 1 to 7 **characterised in that** the outer support profile member (10) is additionally connected to the working implement (2) by way of a tow bar adjustment (23).

9. A collision prevention apparatus for towed agricultural working implements according to claim 8 **characterised in that** the tow bar adjustment (23) also has elastic, mechanical, hydraulic or pneumatic damping elements (12).

10. A collision prevention apparatus for towed agricultural working implements according to claims 1 to 9 **characterised in that** the support profile members (10, 11) are coupled together by way of at least one hydraulic cylinder (30) which can displace the inner support profile member (11) in the outer support profile member (10) in such a way that a reduction in the tow bar length is achieved for safe transport of the working implement (2).

11. A collision prevention apparatus for towed agricultural working implements according to claim 10 **characterised in that** the hydraulic cylinder (30) can be switched into a pressure-less condition during operation of the cutting units (24).

12. A collision prevention apparatus for towed agricultural working implements according to claim 3 **characterised in that** the damping elements (12) are arranged within the outer support profile member (10).

## Revendications

1. Dispositif anti-collision pour des appareils de travail agricoles tractés, en particulier pour des dispositifs de fauchage (2), dont les organes de travail, qui se composent de dispositifs de coupe (24) montés sur une barre de coupe (25), sont disposés sur un châssis principal qui prend appui sur le véhicule tracteur (4), par l'intermédiaire d'une barre de timon (9) liée de manière pivotante au châssis principal, et sur le sol, par l'intermédiaire d'au moins une roue suiveuse (5) réglable en hauteur, **caractérisé en ce que** la rencontre des organes de travail (24, 25) avec un obstacle (27) dans la direction de déplacement (FR) provoque un mouvement relatif entre le véhicule tracteur (4) et l'appareil de travail (2), qui est transmis par au moins un organe de transmission (17) à l'appareil de travail (2) agricole et engendre au niveau de celui-ci un déplacement vertical des organes de travail (24, 25).

2. Dispositif anti-collision pour des appareils de travail agricoles tractés selon la revendication 1, **caractérisé en ce que** le mouvement relatif entre le véhicule tracteur (4) et l'appareil de travail (2) est engendré par une barre de timon (9) formée de profilés porteurs (10, 11) qui coulissent de manière télescopique l'un par rapport à l'autre.

3. Dispositif anti-collision pour des appareils de travail agricoles tractés selon la revendication 2, **caractérisé en ce que** les profilés porteurs (10, 11) sont couplés entre eux par des éléments amortisseurs (12) élastiques, mécaniques, hydrauliques ou pneumatiques.

4. Dispositif anti-collision pour des appareils de travail agricoles tractés selon les revendications 1 à 3, **caractérisé en ce que** l'organe de transmission (17), à une extrémité, est fixé au profilé porteur (10) extérieur et, à son autre extrémité, est fixé à l'extrémité côté tracteur d'un bras oscillant (13) monté pivotant sur le châssis principal (7), dont l'autre extrémité porte la roue suiveuse (5), de sorte que lors d'un mouvement relatif entre les profilés porteurs extérieur et intérieur (10, 11), l'appareil de travail (2) est déplacé dans la direction verticale par l'intermédiaire de la roue suiveuse (5) et de la barre de timon (9).

5. Dispositif anti-collision pour des appareils de travail agricoles tractés selon les revendications 1 à 3, **caractérisé en ce que** l'organe de transmission (17), à une extrémité, est fixé au profilé porteur (10) extérieur et, à l'autre extrémité, est fixé à une barre de coupe (25) qui porte les dispositifs de coupe (24) et pivote autour d'un axe (28) transversal à la direction de déplacement FR, de telle sorte que lors d'un mouvement relatif entre les profilés porteurs extérieur et intérieur (10, 11), seule la barre de coupe (25) portant les outils de coupe (24) se déplace dans la direction verticale.

6. Dispositif anti-collision pour des appareils de travail agricoles tractés selon les revendications 1 à 3, **caractérisé en ce que** l'organe de transmission (17), à une extrémité, est fixé au profilé porteur (10) extérieur et, à l'autre extrémité, agit sur le vérin hydraulique (15) assurant le réglage en hauteur de la roue suiveuse (5), de telle sorte que lors d'un mouvement relatif entre les profilés porteurs extérieur et intérieur (10, 11), la roue suiveuse (5), et avec elle l'appareil de travail (2), sont déplacés dans la direction verticale

7. Dispositif anti-collision pour des appareils de travail agricoles tractés selon les revendications 1 à 6, **caractérisé en ce que** l'organe de transmission (17) est conformé en moyen de traction, en élément d'accouplement mécanique, en élément hydraulique ou pneumatique.

8. Dispositif anti-collision pour des appareils de travail agricoles tractés selon les revendications 1 à 7, **caractérisé en ce que** le profilé porteur (10) extérieur est en outre relié à l'appareil de travail (2) par l'intermédiaire d'un moyen de réglage de barre de timon (23).

9. Dispositif anti-collision pour des appareils de travail agricoles tractés selon la revendication 8, **caractérisé en ce que** le moyen de réglage de barre de timon (23) comporte également des éléments amortisseurs (12) élastiques, mécaniques, hydrauliques ou pneumatiques.

10. Dispositif anti-collision pour des appareils de travail agricoles tractés selon les revendications 1 à 9, **caractérisé en ce que** les profilés porteurs (10, 11) sont couplés l'un à l'autre par l'intermédiaire d'au moins un vérin hydraulique (30) qui peut rentrer le profilé porteur intérieur (11) dans le profilé porteur extérieur (10) de manière à diminuer la longueur de la barre de timon pour un transport sûr de l'appareil de travail (2).

11. Dispositif anti-collision pour des appareils de travail agricoles tractés selon la revendication 10, **caractérisé en ce que** l'alimentation en en fluide de pression du vérin hydraulique (30) peut être coupée pendant le fonctionnement des dispositifs de coupe (24).

12. Dispositif anti-collision pour des appareils de travail agricoles tractés selon la revendication 3, **caractérisé en ce que**. les éléments amortisseurs (12) sont disposés à l'intérieur du profilé porteur extérieur (10).
